# EUROPEAN PATENT SPECIFICATION

(11) **EP 3 554 742 B1**
(45) Date of publication and mention of the grant of the patent: **13.04.2022**
(21) Application number: 17881326.7
(22) Date of filing: 06.11.2017
(51) Int. Cl.: B22C 9/02, B22C 9/10, B22C 21/14, B22D 29/00, B28B 1/00, B28B 7/34, B33Y 10/00, B33Y 80/00, B22C 13/08, B22C 13/12, B29C 64/124, B22C 9/04

(54) **MULTI-PIECE INTEGRATED CORE-SHELL CASTING MOLD WITH STANDOFF AND/OR BUMPER AND METHOD FOR MANUFACTURING THE SAME**
MEHRTEILIGE INTEGRIERTE KERN-SCHALE-GUSSFORM MIT ABSTANDSHALTER UND/ODER STOSSFÄNGER UND VERFAHREN ZU DEREN HERSTELLUNG
MOULE DE COULÉE MULTI-PIÈCE À NOYAU-COQUE INTÉGRÉ AVEC ENTRETOISE ET/OU PARE-CHOCS ET PROCÉDÉ DE FABRICATION DE CELUI-CI

(30) Priority: 13.12.2016 US 201615377746
(43) Date of publication of application: 23.10.2019
(73) Proprietor: General Electric Company, Schenectady, NY 12345 (US)
(72) Inventor: DEINES, James, Herbert, Cincinnati, OH 45215 (US); PRZESLAWSKI, Brian, David, Cincinnati, OH 45215 (US); MCCARREN, Michael, John, Alpha, OH 45301 (US); YANG, Xi, Alpha, OH 45301 (US); PETERSON, Brian, Patrick, Dayton, OH 45301 (US)
(74) Representative: Hafner & Kohl PartmbB
(86) International application number: PCT/US2017/060178
(87) International publication number: WO 2018/111439

(56) References cited:
- EP-A1- 0 585 183
- EP-A1- 1 144 141
- WO-A1-00/32331
- US-A- 5 296 308
- US-A1- 2001 024 000
- US-A1- 2010 003 619
- US-A1- 2010 028 645
- US-A1- 2012 248 657
- US-A1- 2014 271 129
- US-A1- 2016 221 262

## Description

### INTRODUCTION

The present disclosure generally relates to graded investment casting core-shell mold components and processes utilizing these components. The core-shell mold of the present invention is a two piece core-shell mold assembled from a partial mold including a first core and shell portion. The two piece core-shell mold is assembled by attaching the first core and shell portion to at least a second core and shell portion of a second partial mold. In the present invention at least one of the shell or core portions is provided with a standoff aspect which serves to provide the required spacing between the core and shell. The core-shell mold made in accordance with the present invention may also include integrated ceramic filaments between the core and shell of the mold that can be utilized to form holes, i.e., effusion cooling holes, in the cast component made from these two-piece molds. The use of sufficient ceramic filaments between core and shell to both locate and provide leaching pathways for the core serpentine also enables the elimination of ball braze chutes. Ceramic filaments between the tip plenum core and the shell may also be provided to support a floating tip plenum, eliminating the need for traditional tip pins, and their subsequent closure by brazing. The integrated core-shell molds provide useful properties in casting operations, such as in the casting of superalloys used to make turbine blades and stator vanes for jet aircraft engines or power generation turbine components.

### BACKGROUND

Many modern engines and next generation turbine engines require components and parts having intricate and complex geometries, which require new types of materials and manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. The various cooling passages in a blade typically include a serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

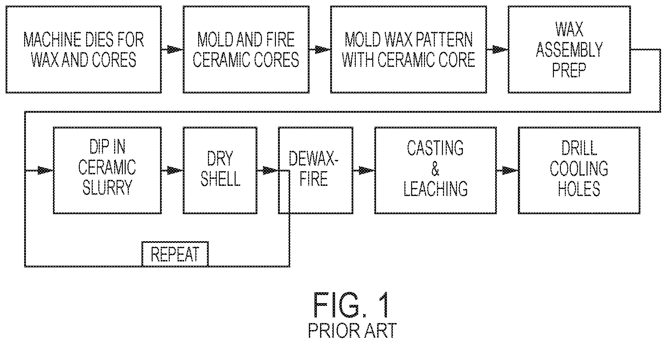

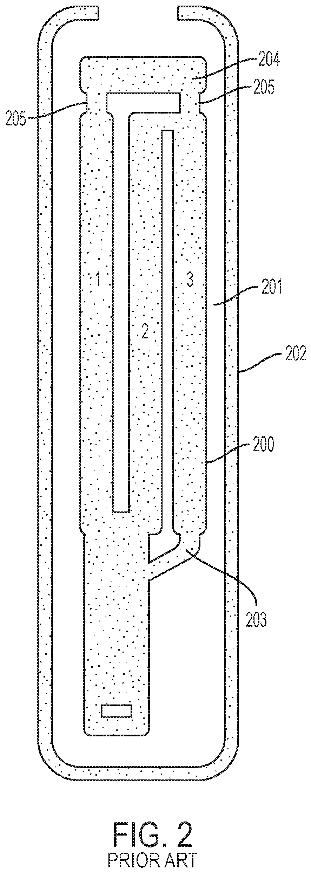

The manufacture of these turbine blades, typically from high strength, superalloy metal materials, involves numerous steps shown in FIG. 1. First, a precision ceramic core is manufactured to conform to the intricate cooling passages desired inside the turbine blade. A precision die or mold is also created which defines the precise 3-D external surface of the turbine blade including its airfoil, platform, and integral dovetail. A schematic view of such a mold structure is shown in FIG. 2. The ceramic core 200 is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell. Then, the wax is melted and removed from the shell 202 leaving a corresponding void or space 201 between the ceramic shell 202 and the internal ceramic core 200 and tip plenum 204. Molten superalloy metal is then poured into the shell to fill the void therein and again encapsulate the ceramic core 200 and tip plenum 204 contained in the shell 202. The molten metal is cooled and solidifies, and then the external shell 202 and internal core 200 and tip plenum 204 are suitably removed leaving behind the desired metallic turbine blade in which the internal cooling passages are found. In order to provide a pathway for removing ceramic core material via a leaching process, a ball chute 203 and tip pins 205 are provided, which upon leaching form a ball chute and tip holes within the turbine blade that must subsequently be brazed shut.

The cast turbine blade may then undergo additional post-casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. After the turbine blade is removed from the ceramic mold, the ball chute 203 of the ceramic core 200 forms a passageway that is later brazed shut to provide the desired pathway of air through the internal voids of the cast turbine blade. However, these post-casting modifications are limited and given the ever increasing complexity of turbine engines and the recognized efficiencies of certain cooling circuits inside turbine blades, more complicated and intricate internal geometries are required. While investment casting is capable of manufacturing these parts, positional precision and intricate internal geometries become more complex to manufacture using these conventional manufacturing processes. Accordingly, it is desired to provide an improved casting method for three dimensional components having intricate internal voids.

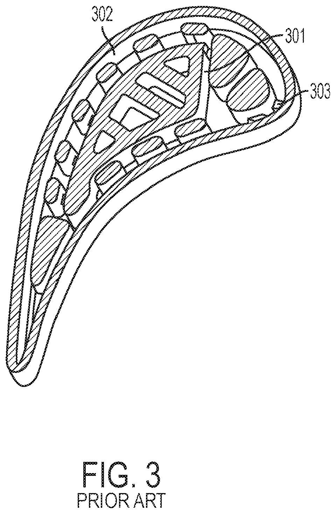

Methods for using 3-D printing to produce a ceramic core-shell mold are described in U.S. Patent No. 8,851,151 assigned to Rolls-Royce Corporation. The methods for making the molds include powder bed ceramic processes such as disclosed U.S. Patent No. 5,387,380 assigned to Massachusetts Institute of Technology, and selective laser activation (SLA) such as disclosed in U.S. Patent No. 5,256,340 assigned to 3D Systems, Inc. The ceramic core-shell molds according to the '151 patent are limited by the printing resolution capabilities of these processes. As shown in FIG. 3, the core portion 301 and shell portion 302 of the integrated core-shell mold is held together via a series of tie structures 303 provided at the bottom edge of the mold. Cooling passages are proposed in the ' 151 patent that include staggered vertical cavities joined by short cylinders, the length of which is nearly the same as its diameter. A superalloy turbine blade is then formed in the core-shell mold using known techniques disclosed in the ' 151 patent. After a turbine blade is cast in one of these core-shell molds, the mold is removed to reveal a cast superalloy turbine blade.

There remains a need to prepare ceramic core-shell molds produced using higher resolution methods that are capable of providing fine detail cast features in the end-product of the casting process.

EP 1 144 141 discloses a multi-wall ceramic core assembly and method of making same wherein a plurality of individual thin wall, arcuate (e.g. airfoil shaped) core elements are formed in respective master dies to have integral interlocking locating features, the individual core elements are prefired in respective ceramic setter supports to have integral locating features, the prefired core elements are assembled together using the locator features of adjacent core elements, and the assembled core elements are adhered together using ceramic adhesive introduced at internal joints defined between mating interlocked locating feature.

EP 0585183 discloses a method of making a casting having an internal passage.

US 2010/003619 and US 2016/221262 each disclose systems and methods for fabricating three-dimensional objects.

### SUMMARY

The invention is defined by the appended claims. According to a first aspect, the present invention relates to a partial ceramic casting mold in accordance with claim 1.

In another aspect, the invention relates to a method for fabricating a ceramic casting mold according to claim 5. After step (d), the process may further include steps for making a cast component, for example by (e) repeating steps (a) through (d) to make a second partial ceramic mold having a shell, a standoff aspect, and at least one locking feature; (f) forming a two piece ceramic mold having a core and shell by interfacing the first partial ceramic mold with the second partial ceramic mold via their locking features; (g) pouring a liquid metal into the two piece ceramic casting mold and solidifying the liquid metal to form the cast component. After step (g), the process may further include a step (h) comprising removing the mold from the cast component, and this step preferably involves mechanically or physically detaching the first ceramic mold portion from the second ceramic mold portion, and optionally also by chemical leaching in an alkaline bath. The step of removing the mold from the cast component can also include leaching at least a portion of the ceramic core through the holes in the cast component provided by the filaments.

In another aspect, the invention relates to a method of preparing a cast component in accordance with claim 8..

In one aspect, the cast component is a turbine blade or stator vane. Preferably the turbine blade or stator vane is used in a gas turbine engine in, for example, an aircraft engine or power generation. The turbine blade or stator vane is preferably a single crystal cast turbine blade or stator vane having a cooling hole pattern defined by the ceramic filaments mentioned above. Preferably, the filaments join the core portion and shell portion where each filament spans between the core and shell, the filaments having a cross sectional area ranging from 0.01 to 2 mm².

The large number of filaments used to form a cooling hole pattern may provide sufficient strength to support the tip core. If the tip filaments are made to support tip plenum core, they may be made larger, i.e., >2 mm cross section area, and a much lower number of filaments, or a single filament, could be used. Although two to four of these larger filaments is a desirable number. After casting, any holes or notches remaining in the tip plenum sidewalls as a result of the filaments may be brazed shut or incorporated into the turbine blade or stator vane design, or the filaments may be placed outside the finish machined shape of the component to prevent the need for this.

In one aspect, at least one standoff feature is a bumper. Preferably the bumper has a convex surface. In another aspect at least standoff feature is a pin. Preferably the bumper or the pin is produced additively. Preferably the bumper or the pin is formed integral to and abuts the first core portion, the first shell portion, the second core portion and/or the second shell portion.

### BRIEF DESCRIPTION OF THE DRAWINGS

FIG. 1 is a flow diagram showing the steps for conventional investment casting.
FIG. 2 is a schematic diagram showing an example of a conventional scheme for a core-shell mold with ball chute prepared by a conventional process.
FIG. 3 shows a perspective view of a prior art integrated core-shell mold with ties connecting the core and shell portions.
FIGS. 4, 5, 6 and 7 show schematic lateral sectional views of a device for carrying out successive phases of the method sequence for direct light processing (DLP)
FIG. 8 shows a schematic sectional view along the line A-A of FIG. 7.
FIG. 9 shows a top view of two core-shell subassemblies and the direction of attachment in accordance with an embodiment of the invention.
FIG. 10 shows an assembled top view of the two core-shell subassemblies shown in FIG. 9.
FIG. 11 shows a side view of a two part integral core-shell mold with attachment points that may be mechanically interlocked.
FIG. 12 shows an interlocking tongue and groove that can be used to attach two core-shell subassemblies in accordance with an embodiment of the invention.
FIG. 13 shows an interlocking dovetail that can be used to attach two core-shell subassemblies in accordance with an embodiment of the invention.
FIG. 14 shows a rabbet joint with integral interlocking peg that can be used to attach two core-shell subassemblies in accordance with an embodiment of the invention.
FIG. 15 shows a two-part integral core-shell mold including filaments extending from the core to the shell for purposes of providing cooling holes in the surface of a turbine blade in accordance with an embodiment of the invention.
FIG. 16 shows a two-part integral core-shell mold including filaments extending from the core to the shell for purposes of providing cooling holes in the surface of a turbine blade in accordance with an embodiment of the invention.
FIG. 17 is a schematic view of an integrated core shell mold having core print filaments exiting beside a blade tip in accordance with an embodiment of the invention.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. For example, the present invention provides a preferred method for making cast metal parts, and preferably those cast metal parts used in the manufacture of jet aircraft engines. Specifically, the production of single crystal, nickel-based superalloy cast parts such as turbine blades, vanes, and shroud components can be advantageously produced in accordance with this invention. However, other cast metal components may be prepared using the techniques and integrated ceramic molds of the present invention.

The present inventors recognized that prior processes known for making integrated core-shell molds lacked the fine resolution capability necessary to print filaments extending between the core and shell portion of the mold of sufficiently small size and quantity to result in effusion cooling holes in the finished turbine blade. In the case of earlier powder bed processes, such as disclosed in U.S. Patent No. 5,387,380 assigned to Massachusetts Institute of Technology, the action of the powder bed recoater arm precludes formation of sufficiently fine filaments extending between the core and shell to provide an effusion cooling hole pattern in the cast part. Other known techniques such as selective laser activation (SLA) such as disclosed in U.S. Patent No. 5,256,340 assigned to 3D Systems, Inc. that employ a top-down irradiation technique may be utilized in producing an integrated core-shell mold in accordance with the present invention. However, the available printing resolution of these systems significantly limits the ability to make filaments of sufficiently small size to serve as effective cooling holes in the cast final product.

The present inventors have found that the integrated core-shell mold of the present invention can be manufactured using direct light processing (DLP). DLP differs from the above discussed powder bed and SLA processes in that the light curing of the polymer occurs through a window at the bottom of a resin tank that projects light upon a build platform that is raised as the process is conducted. With DLP an entire layer of cured polymer is produced simultaneously, and the need to scan a pattern using a laser is eliminated. Further, the polymerization occurs between the underlying window and the last cured layer of the object being built. The underlying window provides support allowing thin filaments of material to be produced without the need for a separate support structure. In other words, producing a thin filament of material bridging two portions of the build object is difficult and was typically avoided in the prior art. For example, the '151 patent discussed above in the background section of this application used vertical plate structures connected with short cylinders, the length of which was on the order of their diameter. Staggered vertical cavities are necessitated by the fact that the powder bed and SLA techniques disclosed in the '151 patent require vertically supported ceramic structures and the techniques are incapable of reliably producing filaments. In addition, the available resolution within a powder bed is on the order of 1/8" making the production of traditional cooling holes impracticable. For example, round cooling holes generally have a diameter of less than 2 mm corresponding to a cooling hole area below 3.2 mm². Production of a hole of such dimensions requires a resolution far below the size of the actual hole given the need to produce the hole from several voxels. This resolution is simply not available in a powder bed process. Similarly, stereolithography is limited in its ability to produce such filaments due to lack of support and resolution problems associated with laser scattering. But the fact that DLP exposes the entire length of the filament and supports it between the window and the build plate enables producing sufficiently thin filaments spanning the entire length between the core and shell to form a ceramic object having the desired cooling hole pattern. Although powder bed and SLA may be used to produce filaments, their ability to produce sufficiently fine filaments as discussed above is limited.

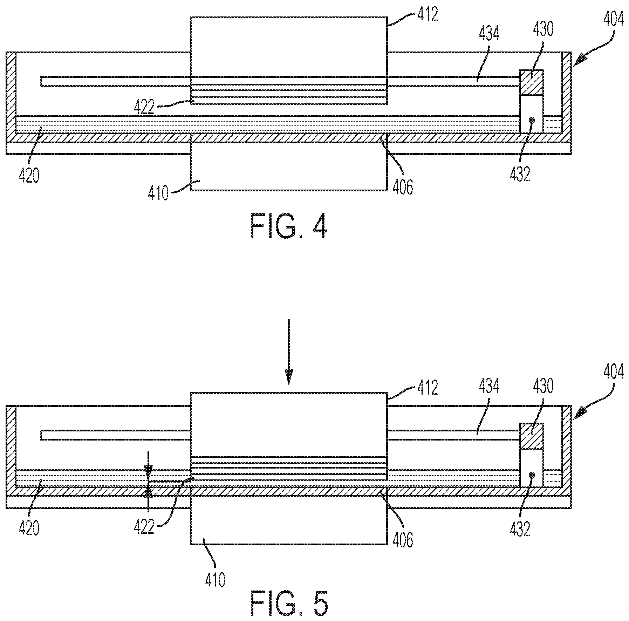

One suitable DLP process is disclosed in U.S. Patent No. 9,079,357 assigned to Ivoclar Vivadent AG and Technische Universitat Wien, as well as WO 2010/045950 A1 and US 2011310370, which are discussed below with reference to FIGS. 4-8. The apparatus includes a tank 404 having at least one translucent bottom portion 406 covering at least a portion of the exposure unit 410. The exposure unit 410 comprises a light source and modulator with which the intensity can be adjusted position-selectively under the control of a control unit, in order to produce an exposure field on the tank bottom 406 with the geometry desired for the layer currently to be formed. As an alternative, a laser may be used in the exposure unit, the light beam of which successively scans the exposure field with the desired intensity pattern by means of a mobile mirror, which is controlled by a control unit.

Opposite the exposure unit 410, a production platform 412 is provided above the tank 404; it is supported by a lifting mechanism (not shown) so that it is held in a height-adjustable way over the tank bottom 406 in the region above the exposure unit 410. The production platform 412 may likewise be transparent or translucent in order that light can be shone in by a further exposure unit above the production platform in such a way that, at least when forming the first layer on the lower side of the production platform 412, it can also be exposed from above so that the layer cured first on the production platform adheres thereto with even greater reliability.

The tank 404 contains a filling of highly viscous photopolymerizable material 420. The material level of the filling is much higher than the thickness of the layers which are intended to be defined for position-selective exposure. In order to define a layer of photopolymerizable material, the following procedure is adopted. The production platform 412 is lowered by the lifting mechanism in a controlled way so that (before the first exposure step) its lower side is immersed in the filling of photopolymerizable material 420 and approaches the tank bottom 406 to such an extent that precisely the desired layer thickness Δ (see FIG. 5) remains between the lower side of the production platform 412 and the tank bottom 406. During this immersion process, photopolymerizable material is displaced from the gap between the lower side of the production platform 412 and the tank bottom 406. After the layer thickness Δ has been set, the desired position-selective layer exposure is carried out for this layer, in order to cure it in the desired shape. Particularly when forming the first layer, exposure from above may also take place through the transparent or translucent production platform 412, so that reliable and complete curing takes place particularly in the contact region between the lower side of the production platform 412 and the photopolymerizable material, and therefore good adhesion of the first layer to the production platform 412 is ensured. After the layer has been formed, the production platform is raised again by means of the lifting mechanism.

These steps are subsequently repeated several times, the distance from the lower side of the layer 422 formed last to the tank bottom 406 respectively being set to the desired layer thickness Δ and the next layer thereupon being cured position-selectively in the desired way.

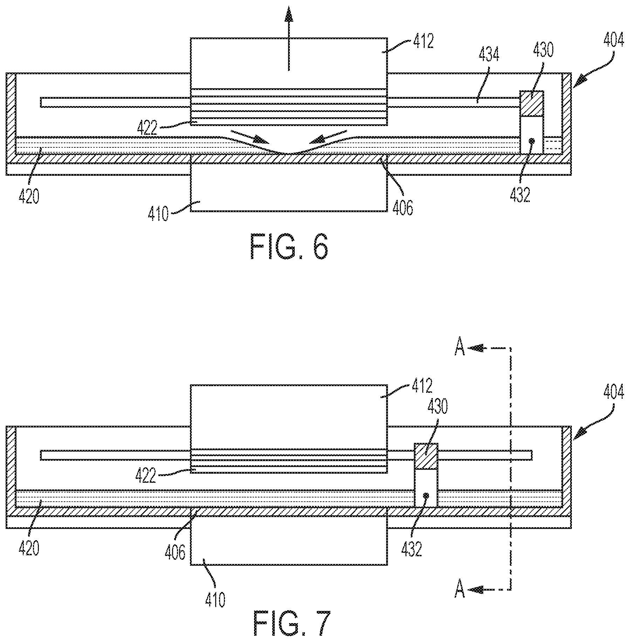

After the production platform 412 has been raised following an exposure step, there is a material deficit in the exposed region as indicated in FIG. 6. This is because after curing the layer set with the thickness Δ, the material of this layer is cured and raised with the production platform and the part of the shaped body already formed thereon. The photopolymerizable material therefore missing between the lower side of the already formed shaped body part and the tank bottom 406 must be filled from the filling of photopolymerizable material 420 from the region surrounding the exposed region. Owing to the high viscosity of the material, however, it does not flow by itself back into the exposed region between the lower side of the shaped body part and the tank bottom, so that material depressions or "holes" can remain here.

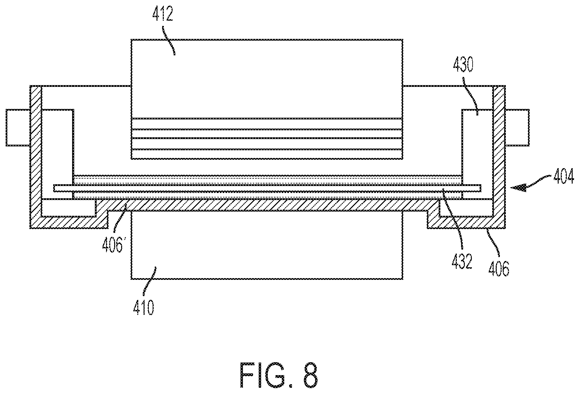

In order to replenish the exposure region with photopolymerizable material, an elongate mixing element 432 is moved through the filling of photopolymerizable material 420 in the tank. In the exemplary embodiment represented in FIGS. 4 to 8, the mixing element 432 comprises an elongate wire which is tensioned between two support arms 430 mounted movably on the side walls of the tank 404. The support arms 430 may be mounted movably in guide slots 434 in the side walls of the tank 404, so that the wire 432 tensioned between the support arms 430 can be moved relative to the tank 404, parallel to the tank bottom 406, by moving the support arms 430 in the guide slots 434. The elongate mixing element 432 has dimensions, and its movement is guided relative to the tank bottom, such that the upper edge of the elongate mixing element 432 remains below the material level of the filling of photopolymerizable material 420 in the tank outside the exposed region. As can be seen in the sectional view of FIG. 8, the mixing element 432 is below the material level in the tank over the entire length of the wire, and only the support arms 430 protrude beyond the material level in the tank. The effect of arranging the elongate mixing element below the material level in the tank 404 is not that the elongate mixing element 432 substantially moves material in front of it during its movement relative to the tank through the exposed region, but rather this material flows over the mixing element 432 while executing a slight upward movement. The movement of the mixing element 432 from the position shown in FIG. 6, to, for example, a new position in the direction indicated by the arrow A, is shown in FIG. 7. It has been found that by this type of action on the photopolymerizable material in the tank, the material is effectively stimulated to flow back into the material-depleted exposed region between the production platform 412 and the exposure unit 410.

The movement of the elongate mixing element 432 relative to the tank may firstly, with a stationary tank 404, be carried out by a linear drive which moves the support arms 430 along the guide slots 434 in order to achieve the desired movement of the elongate mixing element 432 through the exposed region between the production platform 412 and the exposure unit 410. As shown in FIG. 8, the tank bottom 406 has recesses 406' on both sides. The support arms 430 project with their lower ends into these recesses 406'. This makes it possible for the elongate mixing element 432 to be held at the height of the tank bottom 406, without interfering with the movement of the lower ends of the support arms 430 through the tank bottom 406.

Other alternative methods of DLP may be used to prepare the integrated two piece core-shell molds of the present invention. For example, the tank may be positioned on a rotatable platform. When the workpiece is withdrawn from the viscous platform between successive build steps, the tank may be rotated relative to the platform and light source to provide a fresh layer of viscous polymer in which to dip the build platform for building successive layers.

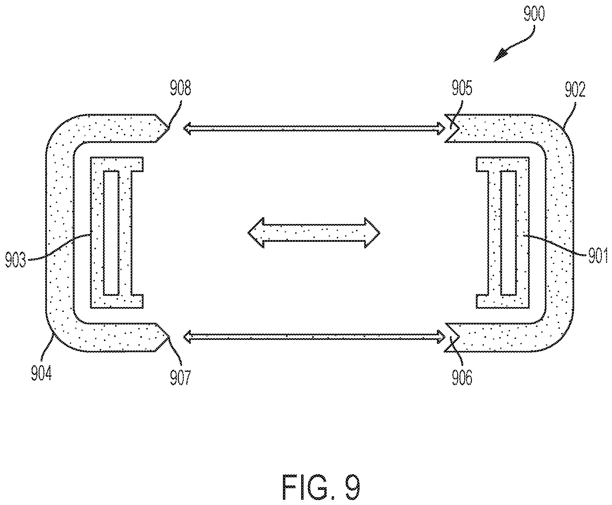

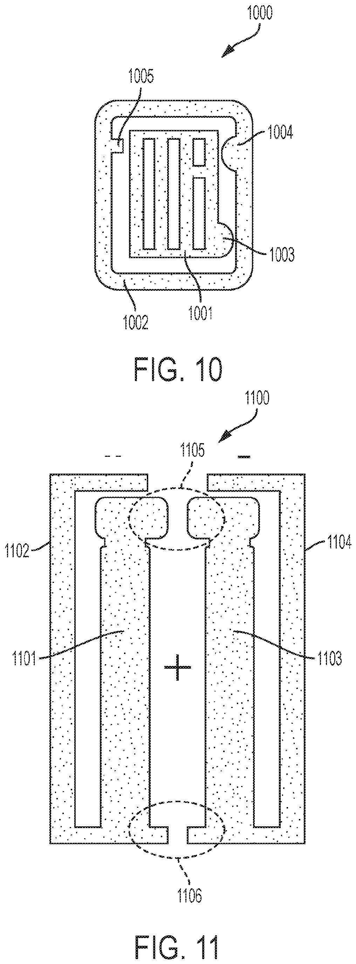

FIG. 9 shows a schematic side view of a two piece integrated core-shell mold 900 in accordance with an aspect of the invention. The first piece includes a partial core 901 and partial shell 902, and the second piece includes a partial core 903 and partial shell 904. The partial core 901 and partial shell 902 may be formed as one integral piece, or may be separate assemblies. The partial core-shell structures are provided with attachment points 905, 906, 907, and 908 that facilitate assembly into a complete core-shell mold 1000 as shown in FIG. 10. The two-piece molds of the present invention have the advantage that they can be inspected prior to assembly and casting. Previous integral one-piece molds had the disadvantage that due to the 3-D printed nature of the mold, inspection of the mold before casting was difficult.

As shown in FIG. 10, the core-shell mold 1000 may include structures integrally formed with the core 1001 or shell 1002 portion. For example, a core bumper 1003 may be provided, or a shell bumper 1004 may be provided. Upon assembly of the two-part mold, the bumpers 1003/1004 function to provide the required spacing between the core 1001 and shell 1002. A pin support 1005 may be provided integral to the shell, which abuts the core portion upon assembly of the two-part core-shell. Although not shown, a pin structure may be provided integral to the core.

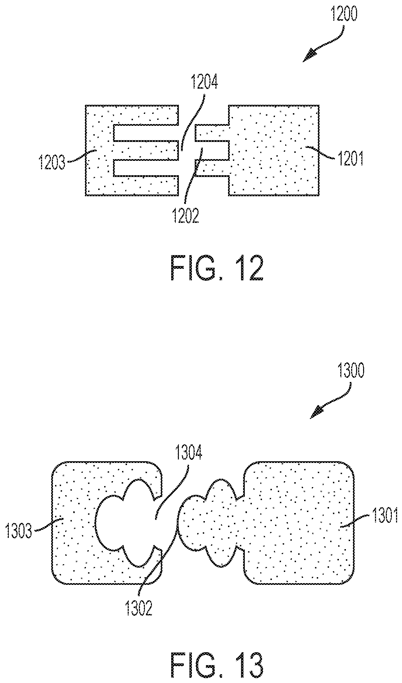

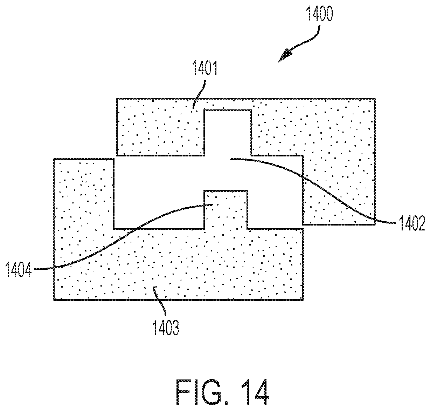

FIG. 11 shows a two-part core shell mold 1100 having a first core/shell portion 1101/1102 and a second core-shell portion 1103/1104. In this embodiment, a first point of attachment 1105 is provided within the tip portion of the core assembly and a second point of attachment 1106 is provided at a portion of the shell region distal to the core tip region. FIGS. 12-14 illustrate several non-limiting examples of attachment mechanisms provided in the ceramic core/shell assembly. FIG. 12 illustrates an interlocking tongue and groove type attachment 1200 with a first outside portion 1201, first inside portion 1202, second outside portion 1203, and second inside portion 1204. FIG. 13 illustrates an interlocking dovetail type attachment 1300 with a first outside portion 1301, first inside portion 1302, second outside portion 1303, and second inside portion 1304. FIG. 14 illustrates a rabbet joint with interlocking peg having a first outside portion 1401, first inside portion 1402, second outside portion 1403, and second inside portion 1404.

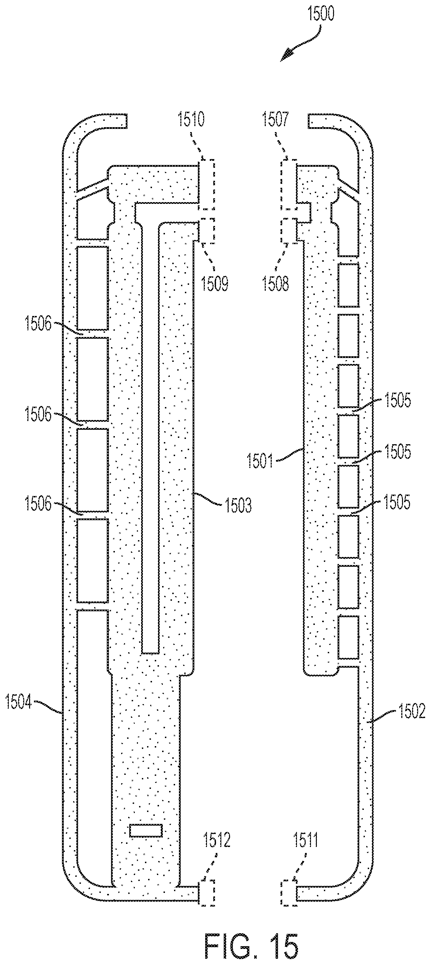

FIG. 15 shows an example of a two-part core-shell assembly 1500 having a first core portion 1501 with attachment mechanisms 1507, 1508 and a first shell portion 1502 with attachment mechanism 1511, a second core portion 1503 with attachment mechanisms 1509, 1510 and a second shell portion 1504 with attachment mechanism 1512. The first core portion 1501 and first shell portion 1502 are linked together with filaments 1505. The second core portion 1503 and second shell portion 1503 are linked together with filaments 1506. After casting of the metal within the core-shell mold and leaching of the filaments, the filaments define a cooling hole pattern in the cast turbine blade. As described in co-pending application, GE Docket # 285020, these structures are preferably formed using the DLP process described in connection with FIGS. 4-11 above. By printing the ceramic mold using the above DLP printing process, the mold can be made in a way that allows the point of connections between the core and shell to be provided through filaments 1505 and/or 1506. Once the core-shell mold is printed, it may be subject to a post-heat treatment step to cure the printed ceramic polymer material. The cured ceramic mold may then be used similar to the traditional casting process used in the production of superalloy turbine blades and stator vanes. Notably because the filaments 1505 and 1506 are provided in a large quantity consistent with formation of a pattern of effusion cooling holes in the surface of a turbine blade or stator vane, the need for a ball chute structure as shown in FIG. 2 may be eliminated.

The filaments 1505 and 1506 are preferably cylindrical or oval shape but may be curved or non-linear. Their exact dimensions may be varied according to a desired film cooling scheme for a particular cast metal part. For example cooling holes may have a cross sectional area ranging from 0.01 to 2 mm². In a turbine blade, the cross sectional area may range from 0.01 to 0.15 mm², more preferably from 0.05 to 0.1 mm², and most preferably about 0.07 mm². In the case of a vane, the cooling holes may have a cross sectional area ranging from 0.05 to 0.2 mm², more preferably 0.1 to 0.18 mm², and most preferably about 0.16 mm². The spacing of the cooling holes is typically a multiple of the diameter of the cooling holes ranging from 2× to 10× the diameter of the cooling holes, most preferably about 4-7× the diameter of the cooling holes.

The length of the filament 1505 and/or 1506 is dictated by the thickness of the cast component, e.g., turbine blade or stator vane wall thickness, and the angle at which the cooling hole is disposed relative to the surface of the cast component. The typical lengths range from 0.5 to 5 mm, more preferably between 0.7 to 1 mm, and most preferably about 0.9 mm. The angle at which a cooling hole is disposed is approximately 5 to 35° relative to the surface, more preferably between 10 to 20°, and most preferably approximately 12°. It should be appreciated that the methods of casting according to the present invention allow for formation of cooling holes having a lower angle relative to the surface of the cast component than currently available using conventional machining techniques.

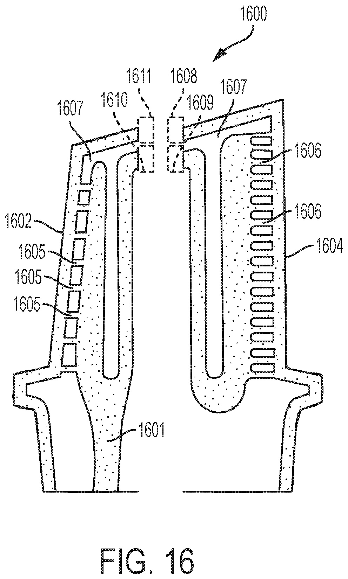

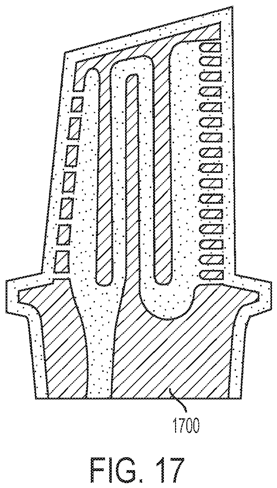

FIG. 16 shows a side view of an integrated core-shell mold 1600 according to an embodiment of the present invention. As with the schematic shown in FIG. 15, the first core portion 1601 is connected to the first shell portion 1602 through several filaments 1605. Likewise, the second core portion 1603 is connected to the second shell portion 1604 through several filaments 1606. The first core portion 1601 and the first shell portion 1602 can be attached to the second core portion 1602 and the second shell portion 1604 via attachment mechanisms 1608, 1609, 1610 and 1611to form the complete core-shell mold assembly 1600. The assembled core-shell mold 1600 defines a cavity 1607 for investment casting a turbine blade. FIG. 17 shows the cavity 1607 filled with a metal 1700, such as a nickel based alloy, i.e., Inconel. Upon leaching of the ceramic core-shell, the resulting cast object is a turbine blade or stator vane having a cooling hole pattern in the surface of the blade or vane. It should be appreciated that although FIGS. 16-17 provide a cross sectional view showing cooling holes at the leading and trailing edge of the turbine blade, that additional cooling holes may be provided where desired including on the sides of the turbine blades or any other location desired. In particular, the present invention may be used to form cooling holes within the casting process in any particular design. In other words, one would be able to produce conventional cooling holes in any pattern where drilling was used previously to form the cooling holes. However, the present invention will allow for cooling hole patterns previously unattainable due to the limitations of conventional technologies for creating cooling holes within cast components, i.e., drilling.

After leaching, the resulting holes in the turbine blade or stator vane from the core print filaments may be brazed shut if desired. Otherwise the holes left by the core print filaments may be incorporated into the design of the internal cooling passages. Alternatively, cooling hole filaments may be provided to connect the tip plenum core to the shell in a sufficient quantity to hold the tip plenum core in place during the metal casting step.

After printing the core-shell mold structures in accordance with the invention, the core-shell mold may be cured and/or fired depending upon the requirements of the ceramic core photopolymer material. Molten metal may be poured into the mold to form a cast object in the shape and having the features provided by the integrated core-shell mold. In the case of a turbine blade or stator vane, the molten metal is preferably a superalloy metal that is formed into a single crystal superalloy turbine blade or stator vane using techniques known to be used with conventional investment casting molds.

This written description uses examples to disclose the invention, including the preferred embodiments, and also to enable any person skilled in the art to practice the invention, including making and using any devices or systems and performing any incorporated methods. The patentable scope of the invention is defined by the appended claims.

## Claims

1. A partial ceramic casting mold (1500) comprising:
a first core portion (1501) and a first shell portion (1502) both made of a liquid ceramic photopolymer, the first core portion (1501) and first shell portion (1502) adapted to interface with at least a second core portion (1503) and second shell portion (1504) both made of a liquid ceramic photopolymer to form a ceramic casting mold (1500) comprising a cavity between the first and second core portions (1501, 1503) and the first and second shell portions (1502, 1504), the cavity adapted to define a cast component upon casting and removal of the ceramic casting mold (1500), and
the first core portion (1501) or first shell portion (1502) comprises at least one standoff feature that protrudes into the cavity between the first core portion (1501) and first shell portion (1502) that is adapted to provide a minimum spacing between the first core portion (1501) and first shell portion (1502); wherein the at least one standoff feature is a bumper or a pin.

2. The partial ceramic casting mold of claim 1, wherein the cast component is a turbine blade or a stator vane.

3. The partial ceramic casting mold of any one of claims 1, wherein at least one standoff feature is a bumper, wherein one bumper is provided integral to the first core portion (1501) and another bumper is provided integral to the first shell portion (1502).

4. The partial ceramic casting mold of any one of claims 1, wherein at least one standoff feature is a pin; wherein at least one pin is integral to the second shell portion (1504) and abuts the second core portion (1503).

5. A method for fabricating a ceramic casting mold, comprising:
(a) contacting a cured portion of a workpiece with a liquid ceramic photopolymer;
(b) irradiating a portion of the liquid ceramic photopolymer adjacent to the cured portion through a window contacting the liquid ceramic photopolymer;
(c) removing the workpiece from the uncured liquid ceramic photopolymer; and
(d) repeating steps (a) - (c) until a first core portion (1501) and a first shell portion (1502) of a ceramic casting mold (1500) is formed, the first core portion (1501) and first shell portion (1502) adapted to interface with at least a second core portion (1503) and second shell portion (1504) to form a ceramic casting mold (1500) comprising a cavity between the first and second core portions (1501, 1503) and the first and second shell portions (1502, 1504), the cavity adapted to define a cast component upon casting and removal of the ceramic casting mold (1500), and
the first core portion (1501) or first shell portion (1502) comprises at least one standoff feature that protrudes into the cavity between the first core portion (1501) and first shell portion (1502) that is adapted to provide a minimum spacing between the first core portion (1501) and first shell portion (1502); wherein one or more of said at least one standoff feature is a bumper or a pin.

6. The method of claim 5, wherein one bumper is formed integral to the first core portion and another bumper is formed integral to the first shell portion.

7. The method of claim 5, wherein the pin is formed integral to the second shell portion (1502) and abuts the second core portion (1503).

8. A method of preparing a cast component comprising:
a method for fabricating a ceramic casting mold according to claim 5,
assembling a first core portion (1500) and a first shell portion (1502) of a ceramic casting mold (1500) with at least a second core portion (1503) and second shell portion (1504) to form a ceramic casting mold (1500) comprising a cavity between the first and second core portions (1501, 1503) and the first and second shell portions (1502, 1504), the cavity adapted to define a cast component upon casting and removal of the ceramic casting mold (1500), the first core portion (1501) or first shell portion (1502) comprising at least one standoff feature that protrudes into the cavity between the first core portion (1501) and first shell portion (1502) that is adapted to provide a minimum spacing between the first core portion (1501) and first shell portion (1502); wherein said at least one standoff feature is a bumper or a pin;
pouring a liquid metal into the ceramic casting mold (1500) and solidifying the liquid metal to form, the cast component; and
removing the ceramic casting mold (1500) from the cast component.

## Patentansprüche

1. Eine teilkeramische Gussform (1500), umfassend:
einen ersten Kernbereich (1501) und einen ersten Mantelbereich (1502), die beide aus einem flüssigen keramischen Photopolymer hergestellt sind, wobei der erste Kernbereich (1501) und der erste Mantelbereich (1502) so angepasst sind, dass sie mit mindestens einem zweiten Kernbereich (1503) und einem zweiten Mantelbereich (1504), die beide aus einem flüssigen keramischen Photopolymer hergestellt sind, in Berührung kommen, um eine keramische Gussform (1500) zu bilden, die einen Hohlraum zwischen dem ersten und zweiten Kernbereich (1501, 1503) und dem ersten und zweiten Mantelbereich (1502, 1504) umfasst, wobei der Hohlraum so angepasst ist, dass eine Gusskomponente beim Gießen und Entfernen der keramischen Gussform (1500) definiert wird, und
der erste Kernbereich (1501) oder der erste Mantelbereich (1502) mindestens ein Abstandsmerkmal umfasst, das in den Hohlraum zwischen dem ersten Kernbereich (1501) und dem ersten Mantelbereich (1502) hineinragt, und das so angepasst ist, dass es einen Mindestabstand zwischen dem ersten Kernbereich (1501) und dem ersten Mantelbereich (1502) bildet; worin das mindestens eine Abstandsmerkmal ein Stoßdämpfer oder ein Stützträger ist.

2. Teilkeramische Gussform nach Anspruch 1, worin die Gusskomponente eine Turbinenschaufel oder eine Statorschaufel ist.

3. Teilkeramische Gussform nach einem der Ansprüche 1, worin mindestens ein Abstandsmerkmal ein Stoßdämpfer ist, worin ein Stoßdämpfer integral mit dem ersten Kernbereich (1501) und ein anderer Stoßdämpfer integral mit dem ersten Mantelbereich (1502) gebildet wird.

4. Teilkeramische Gussform nach einem der Ansprüche 1, worin mindestens ein Abstandsmerkmal ein Stützträger ist; worin mindestens ein Stützträger integral mit dem zweiten Mantelbereich (1504) ist und am zweiten Kernbereich (1503) anliegt.

5. Verfahren zur Herstellung einer keramischen Gussform, umfassend:
(a) Inkontaktbringen eines gehärteten Teils eines Werkstücks mit einem flüssigen keramischen Photopolymer;
(b) Bestrahlen eines Teils des flüssigen keramischen Photopolymers, der an den gehärteten Teil angrenzt, durch ein Fenster, das mit dem flüssigen keramischen Photopolymer in Kontakt steht;
(c) Entfernen des Werkstücks aus dem ungehärteten flüssigen Keramikphotopolymer; und
(d) Wiederholen der Schritte (a) - (c), bis ein erster Kernbereich (1501) und ein erster Mantelbereich (1502) einer keramischen Gussform (1500) gebildet sind, wobei der erste Kernbereich (1501) und der erste Mantelbereich (1502) so angepasst sind, dass sie mit mindestens einem zweiten Kernbereich (1503) und einem zweiten Mantelbereich (1504) zusammenwirken, um eine keramische Gussform (1500) zu bilden, die einen Hohlraum zwischen dem ersten und dem zweiten Kernbereich (1501, (1501, 1503) und dem ersten und zweiten Mantelbereich (1502, 1504) umfasst, wobei der Hohlraum so angepasst ist, dass eine Gusskomponente beim Gießen und Entfernen der keramischen Gussform (1500) definiert wird, und
der erste Kernbereich (1501) oder der erste Mantelbereich (1502) mindestens ein Abstandsmerkmal umfasst, das in den Hohlraum zwischen dem ersten Kernbereich (1501) und dem ersten Mantelbereich (1502) hineinragt, das so angepasst ist, dass es einen minimalen Abstand zwischen dem ersten Kernbereich (1501) und dem ersten Mantelbereich (1502) bildet; worin eines oder mehrere der mindestens einen Abstandsmerkmale ein Stoßdämpfer oder ein Stützträger sind.

6. Verfahren nach Anspruch 5, worin ein Stoßdämpfer integral mit dem ersten Kernbereich und ein anderer Stoßdämpfer integral mit dem ersten Mantelbereich verbunden ist.

7. Verfahren nach Anspruch 5, worin der Stift integral mit dem zweiten Mantelbereich (1502) gebildet ist und an dem zweiten Kernbereich (1503) anliegt.

8. Verfahren zur Herstellung einer Gusskomponente, umfassend:
ein Verfahren zur Herstellung einer keramischen Gussform gemäß Anspruch 5, wobei ein erster Kernbereich (1500) und ein erster Mantelbereich (1502) einer keramischen Gussform (1500) mit mindestens einem zweiten Kernbereich (1503) und einem zweiten Mantelbereich (1504) zusammengefügt werden, um eine keramische Gussform (1500) zu bilden, die einen Hohlraum zwischen dem ersten und dem zweiten Kernbereich (1501, 1503) und dem ersten und dem zweiten Mantelbereich (1502, 1504) umfasst, wobei der Hohlraum so angepasst ist, dass eine Gusskomponente beim Gießen und Entfernen der keramischen Gussform (1500) definiert wird, wobei der erste Kernbereich (1501) oder der erste Mantelbereich (1502) mindestens ein Abstandsmerkmal umfasst, das in den Hohlraum zwischen dem ersten Kernbereich (1501) und dem ersten Mantelbereich (1502) hineinragt, und das so angepasst ist, dass es einen Mindestabstand zwischen dem ersten Kernbereich (1501) und dem ersten Mantelbereich (1502) bildet; worin das mindestens eine Abstandsmerkmal ein Stoßdämpfer oder ein Stützträger ist; Gießen eines flüssigen Metalls in die keramische Gussform (1500) und Verfestigen des flüssigen Metalls, um die Gusskomponente zu bilden; und
Entfernen der keramischen Gussform (1500) von der Gusskomponente.

## Revendications

1. Moule de coulée de céramique partiel (1500), comprenant :
une première portion cœur (1501) et une première portion coque (1502), toutes les deux formées d'un photopolymère céramique liquide, la première portion cœur (1501) et la première portion coque (1502) étant adaptées pour servir d'interface avec au moins une seconde portion cœur (1503) et une seconde portion coque (1504), les deux étant formées d'un photopolymère céramique liquide pour former un moule de coulée céramique (1500) comprenant une cavité entre les premières et secondes portions cœurs (1501, 1503) et les premières et secondes portions coques (1502, 1504), la cavité étant adaptée pour définir un composant coulé à la coulée et à l'extraction du moule de coulée céramique (1500), et
la première portion cœur (1501) ou la première portion coque (1502) comprend au moins un élément saillant qui dépasse dans la cavité entre la première portion cœur (1501) et la première portion coque (1502), qui est adaptée pour fournir un espacement minimum entre la première portion cœur (1501) et la première portion coque (1502) ; l'au moins un élément saillant étant un élément intercalaire ou une pointe.

2. Moule de coulée de céramique partiel selon la revendication 1, dans lequel le composant coulé est une pale de turbine ou une aube de stator.

3. Moule de coulée de céramique partiel selon la revendication 1, dans lequel au moins un élément saillant est un élément intercalaire, un élément intercalaire étant conçu comme partie intégrante de la première portion cœur (1501) et un autre élément intercalaire étant conçu comme partie intégrante de la première portion coque (1502).

4. Moule de coulée de céramique partiel selon la revendication 1, dans lequel au moins un élément saillant est une pointe, l'au moins une pointe faisant partie intégrante de la seconde portion coque (1504) et venant buter contre la seconde portion cœur (1503).

5. Procédé de fabrication d'un moule de coulée de céramique, comprenant de :
(a) mettre en contact une portion solidifiée d'une pièce de travail avec un photopolymère liquide céramique ;
(b) irradier une portion du photopolymère liquide céramique adjacente à la portion solidifiée à travers une fenêtre en contact avec le photopolymère liquide céramique ;
(c) enlever la pièce de travail du photopolymère liquide céramique non polymérisé ; et
(d) répéter les étapes (a) - (c) jusqu'à ce qu'une première portion cœur (1501) et une première portion coque (1502) d'un moule de coulée de céramique (1500) soient formées, la première portion cœur (1501) et la première portion coque (1502) étant adaptées pour servir d'interface avec au moins une seconde portion cœur (1503) et une seconde portion coque (1504) pour former un moule de coulée de céramique (1500) comprenant une cavité entre la première et la seconde portions cœur (1501, 1503) et la première et la seconde portions coque (1502, 1504), la cavité étant adaptée pour définir un composant coulé à la coulée et à l'extraction du moule de coulée de céramique (1500), et la première portion cœur (1501) ou la première portion coque (1502) comprend au moins un élément saillant qui dépasse dans la cavité entre la première portion cœur (1501) et la première portion coque (1502), qui est adaptée pour fournir un espacement minimum entre la première portion cœur (1501) et la première portion coque (1502) ; au moins un dudit élément saillant étant un élément intercalaire ou une pointe.

6. Procédé selon la revendication 5, dans lequel un élément intercalaire, un élément intercalaire est conçu comme partie intégrante de la première portion cœur et un autre élément intercalaire est conçu comme partie intégrante de la première portion coque.

7. Procédé selon la revendication 5, dans lequel la pointe fait partie intégrante de la seconde portion coque (1502) et vient buter contre la seconde portion cœur (1503).

8. Procédé de préparation d'une composant coulé comprenant :
un procédé de fabrication d'un moule de coulée de céramique selon la revendication 5, en assemblant une première portion cœur (1501) et une première portion coque (1502) d'un moule de coulée de céramique (1500) avec au moins une seconde portion cœur (1503) et une seconde portion coque (1504) pour former un moule de coulée de céramique (1500) comprenant une cavité entre la première et la seconde portions cœur (1501, 1503) et la première et la seconde portions coque (1502, 1504), la cavité étant adaptée pour définir un composant coulé à la coulée et à l'extraction du moule de coulée de céramique (1500), la première portion cœur (1501) ou la première portion coque (1502) comprenant au moins un élément saillant qui dépasse dans la cavité entre la première portion cœur (1501) et la première portion coque (1502) qui est adaptée pour fournir un espacement minimum entre la première portion cœur (1501) et la première portion coque (1502) ; où ledit au moins un élément saillant est un élément intercalaire ou une pointe ; en versent un métal liquide dans le moule de coulée de céramique (1500) et solidifier le métal liquide pour former le composant coulé ; et en enlevant le moule de coulée de céramique (1500) du composant coulé.
